# EUROPEAN PATENT APPLICATION

(11) **EP 4 726 231 A1**
(43) Date of publication of application: **15.04.2026**
(21) Application number: 24877164.4
(22) Date of filing: 08.10.2024
(51) Int. Cl.: F16F 7/12, B60R 19/34

(54) **CRASH BOX**

(30) Priority: 12.10.2023 JP 2023176771
(71) Applicant: Toyoda Iron Works Co., Ltd., Toyota-shi, Aichi 471-8507 (JP)
(72) Inventor: RYUTAKI, Kozo, Toyota-shi, Aichi 471-8507 (JP); YAMAMOTO, Akiyoshi, Toyota-shi, Aichi 471-8507 (JP)
(74) Representative: Stöckeler, Ferdinand
(86) International application number: PCT/JP2024/035901
(87) International publication number: WO 2025/079569

(57) **Abstract**

One embodiment is a crash box including a tubular body 11 that is formed in a tubular shape so as to form a hollow portion inside, and is buckled and deformed by receiving a collision load input in a penetrating direction of the hollow portion to absorb collision energy, and an intermediate plate 16 that is held by the tubular body 11 and is a plate body that divides the hollow portion into two regions. The intermediate plate 16 has bent portions 16a to 16d formed on a plate surface, and a protruding end associated with bending of the bent portions 16a to 16d forms a ridgeline extending in a straight line in a collision load input direction.

## Description

### TECHNICAL FIELD

The present application relates to a crash box.

### BACKGROUND ART

A crash box is disposed at a distal end of a frame of a vehicle body and is deformed to absorb collision energy when a vehicle collides. For example, a crash box disclosed in JP-A-2023-82995 is configured such that a tubular body that is deformed by receiving a collision load is formed by joining a pair of half bodies with a rivet pin.

### SUMMARY OF INVENTION

If strength of members constituting a tubular body is increased to meet a demand for an increase in collision energy absorption amount, weight and manufacturing cost of a crash box increase. It is desirable to increase the collision energy absorption amount while suppressing the increase in weight and manufacturing cost by adding a reinforcing member to deformation of the tubular body due to the collision.

One aspect of the present technology is a crash box including a tubular body that is formed in a tubular shape so as to form a hollow portion inside, and is buckled and deformed by receiving a collision load input in a penetrating direction of the hollow portion to absorb collision energy, and an intermediate plate that is held by the tubular body and is a plate body that divides the hollow portion into two regions. The intermediate plate has a bent portion formed on a plate surface, and a protruding end associated with bending of the bent portion forms a ridgeline extending in a straight line in a collision load input direction.

In some embodiments, the tubular body is configured such that half bodies divided into two in the direction intersecting the input direction of the collision load are joined by joint portions formed along a division line, and the intermediate plate is sandwiched between the joint portions of the half bodies joined to each other.

In some embodiments, the intermediate plate includes a plurality of the bent portions, and the protruding ends of the respective bent portions are formed on both front and back sides of a plate surface of the intermediate plate.

In some embodiments, the crash box includes an end plate covering an end portion of the tubular body so as to close the hollow portion of the tubular body. The intermediate plate includes a contact portion in contact with the end plate at an end portion facing the end plate, and a non-contact portion adjacent to the contact portion and separated from the end plate so as not to contact the end plate.

In some embodiments, the non-contact portions of the intermediate plate are formed on both sides of the contact portion, respectively.

In some embodiments, the intermediate plate includes the contact portion and the non-contact portion at an end portion on an input side of the collision load.

In some embodiments, the intermediate plate is formed with the bent portion corresponding to the contact portion.

In some embodiments, the intermediate plate is formed with a plurality of the bent portions corresponding to the contact portion, at least some of the plurality of bent portions are formed not parallel to each other, and other bent portion adjacent to one of the bent portions is arranged to be inclined such that the adjacent bent portions are separated from each other toward an input side of the collision load as compared with a side opposite the input side.

In some embodiments, the tubular body is reinforced by the intermediate plate against buckling deformation due to the collision load, which can increase a collision energy absorption amount as the crash box. In addition, the intermediate plate is the plate body, and the buckling deformation strength of the intermediate plate itself against the collision load is increased by the bent portion. Thus, the intermediate plate can be thinned, the tubular body and other members do not need to be increased in strength, and the increase in the weight and manufacturing cost as the crash box can be suppressed.

### BRIEF DESCRIPTION OF DRAWINGS

Fig. 1 is a plan view of a bumper device including crash boxes as one embodiment.
Fig. 2 is an enlarged plan view of the crash box as one embodiment.
Fig. 3 is an enlarged perspective view of the crash box in Fig. 2.
Fig. 4 is an enlarged perspective view of the crash box in Fig. 2 as viewed from a direction different from that of Fig. 3.
Fig. 5 is a perspective view, similar to Fig. 4, of the crash box from which one of half bodies forming a tubular body is removed.
Fig. 6 is an exploded perspective view of the crash box in Fig. 2.
Fig. 7 is a cross-sectional view of the crash box in Fig. 5, taken along line VII-VII.
Fig. 8 is a front view of an intermediate plate of the crash box in Fig. 2.
Fig. 9 is a cross-sectional view of the intermediate plate in Fig. 8, taken along line IX-IX.
Fig. 10 is a front view of an intermediate plate of a crash box as another embodiment.
Fig. 11 is a characteristic line diagram illustrating a load and an energy absorption amount associated with deformation due to a collision load of the crash box in Figs. 2 and 10.
Fig. 12 is a graph illustrating load efficiency at time of the deformation due to the collision load of the crash box in Fig. 2.
Fig. 13 is a graph illustrating energy absorption efficiency at the time of the deformation due to the collision load of the crash box in Fig. 2.

### DESCRIPTION OF EMBODIMENTS

### <Crash Box>

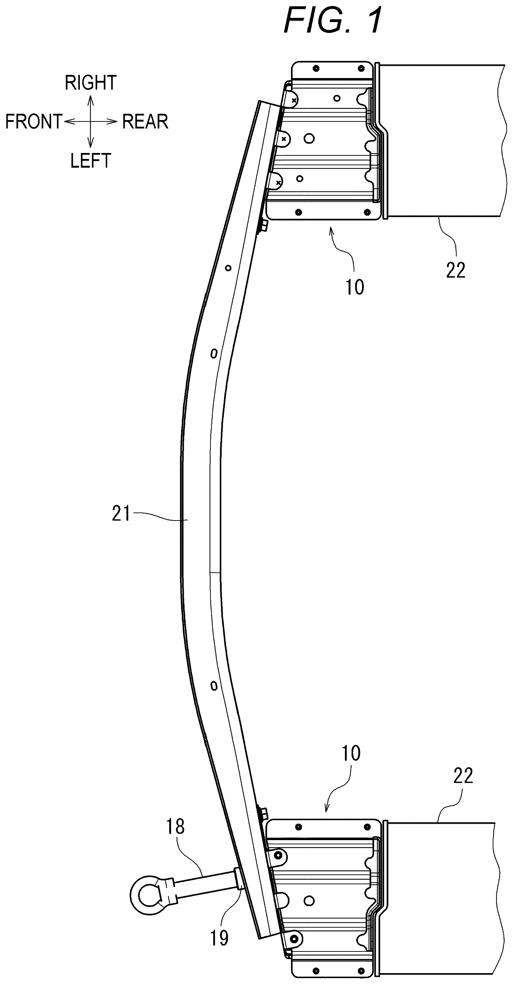

Various embodiments will be described hereinafter with reference to the drawings. Fig. 1 illustrates a state in which crash boxes 10 as one embodiment are coupled to left and right end portions of a bumper reinforcement 21 in front of a vehicle. In Fig. 1, intersecting arrows indicate respective directions when a forward direction of a vehicle 20 is set to "front". Hereinafter, the directions will be described based on this direction.

In general, two crash boxes 10 are provided in each of the bumper reinforcements 21 in the front and rear of the vehicle, and a total of four crash boxes 10 are provided at positions corresponding to left and right side members 22. Specifically, the respective crash boxes 10 are coupled, with the bumper reinforcements 21 in the front and rear of the vehicle and the side members 22 in the front, rear, left, and right of the vehicle body interposed therebetween. Each crash box 10 is entirely made of a steel plate, and has a function of being buckled and deformed by receiving a collision load applied from the front or rear of the vehicle via the bumper reinforcement 21 and absorbing collision energy.

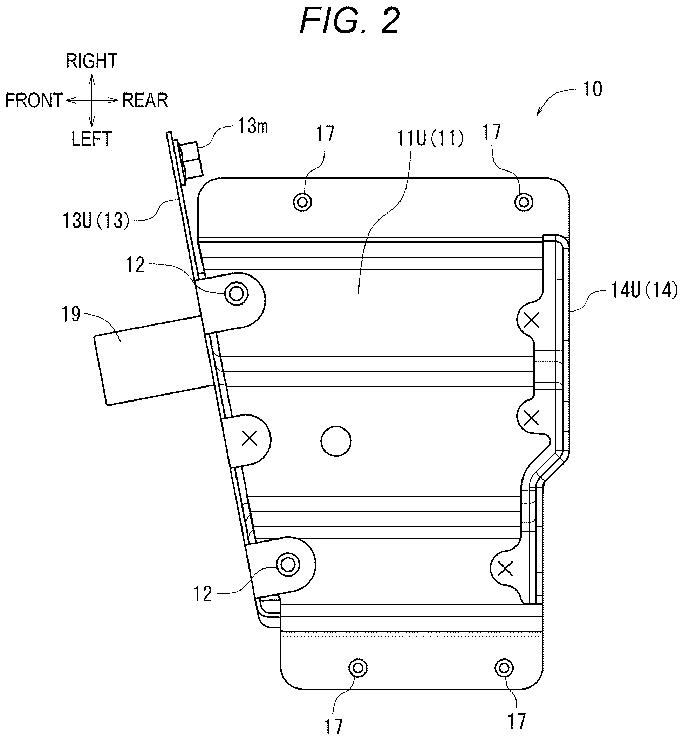

Hereinafter, the crash box 10 disposed in the left front of the vehicle will be described with reference to Figs. 2 to 9, but the crash boxes 10 at the other positions can be configured in a similar manner. For example, the crash box 10 disposed in the right front can be configured line-symmetrically with the crash box 10 disposed in the left front. In addition, the crash box disposed in the right rear can be configured point-symmetrically with the crash box 10 disposed in the left front, and the crash box disposed in the left rear can be configured point-symmetrically with the crash box 10 disposed in the right front.

### <Tubular Body of Crash Box>

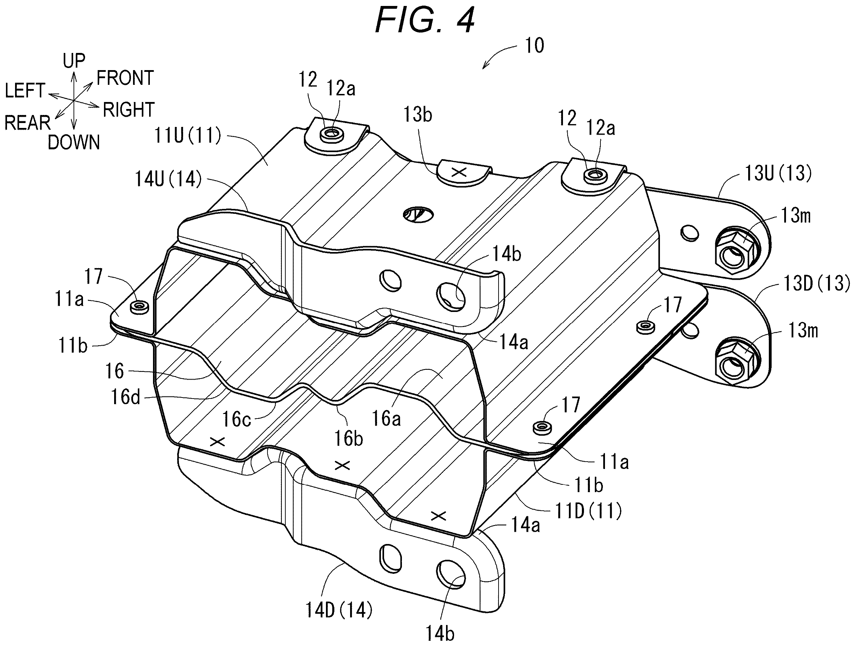

As illustrated in Figs. 2 to 6, the crash box 10 includes a tubular body 11 formed in a tubular shape so as to form a hollow portion inside, and an intermediate plate 16 that is a plate body dividing the hollow portion in the tubular body 11 into two regions in an up-down direction. The tubular body 11 can be constituted by two upper and lower half bodies 11U and 11D divided into two in the up-down direction. As illustrated in Fig. 4, the upper and lower half bodies 11U and 11D are joined together up and down by joint portions 11a and 11b formed along a division line, thereby forming the tubular body 11 having a substantially rectangular shape. As another embodiment (not illustrated), the tubular body 11 can also be divided in other directions intersecting an input direction of the collision load, such as a left-right direction, instead of the up-down direction. As still another embodiment (not illustrated), the tubular body 11 is not formed of the upper and lower two half bodies 11U and 11D, but can be formed by bending one plate into a tubular shape.

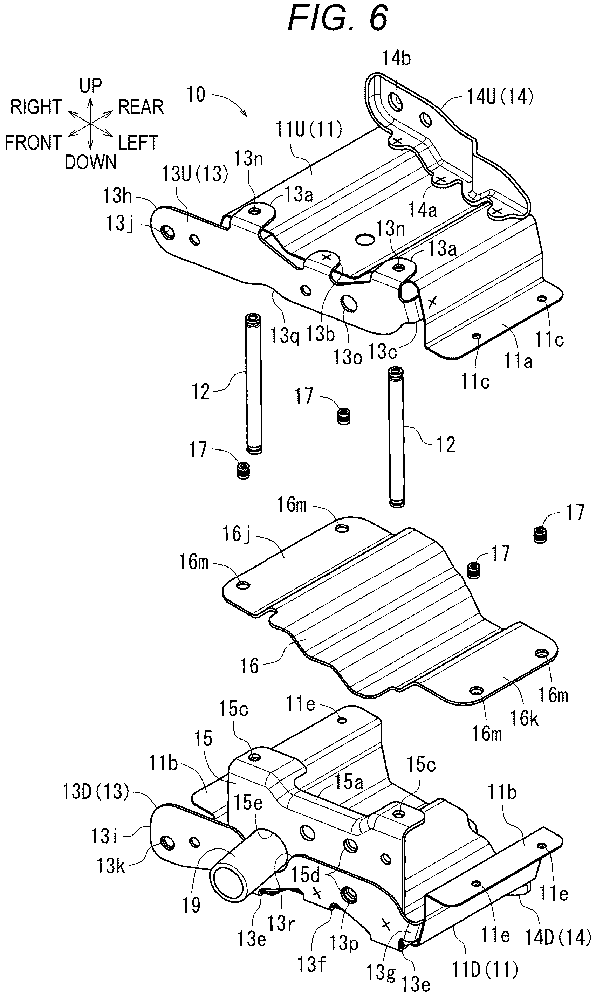

As illustrated in Figs. 4 and 6, the joint portions 11a and 11b are formed to extend in flange shapes in directions opposite to each other in the left-right direction. A plurality of (in this case, two) through holes 11c and 11e spaced apart from each other in a front-rear direction is bored in a plane surface of each of the joint portions 11a and 11b, and a short rivet pin 17 is inserted into each of the through holes 11c and 11e and riveting is performed from the up-down direction, whereby the upper and lower half bodies 11U and 11D are coupled to form one tubular body 11.

### <Front Mounting Bracket>

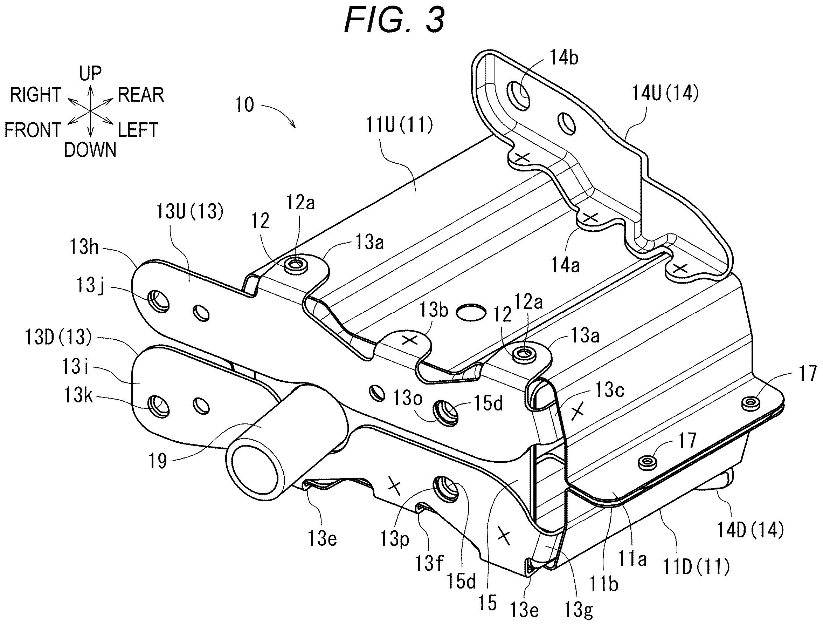

As illustrated in Figs. 3 and 6, as illustrated in Figs. 2 to 6, the crash box 10 includes a front mounting bracket 13 for fixing the tubular body 11 to the bumper reinforcement 21, and a rear mounting bracket 14 for fixing the tubular body 11 to the rear side member 22. A plate-shaped upper front mounting bracket 13U and a plate-shaped lower front mounting bracket 13D elongated in the left-right direction are joined to respective front end portions of the upper half body 11U and the lower half body 11D, respectively, by spot welding. Spot welded portions are indicated by cross marks in each drawing. Cross marks are similarly applied to other spot welded portions. As illustrated in Fig. 3, when the upper half body 11U and the lower half body 11D are combined as the tubular body 11, the upper front mounting bracket 13U and the lower front mounting bracket 13D cover a front end portion of the tubular body 11 so as to close the hollow portion inside the tubular body 11 together. The upper front mounting bracket 13U and the lower front mounting bracket 13D are respectively formed with a plurality of (four in this case) flange portions 13a to 13c and 13e to 13g individually extending along a plate surface of the tubular body 11. Among them, the three flange portions 13a to 13b and the three flange portions 13e to 13f extend along an outer wall surface of the tubular body 11, and the remaining one flange portion 13c and one flange portion 13g extend along an inner wall surface of the tubular body 11.

Among the three flange portions 13a to 13b and 13e to 13f extending along the outer wall surface of the tubular body 11, the flange portions 13a and 13e each located on both left and right sides are riveted and coupled to both upper and lower end portions of a long rivet pin 12 together with the respective front end portions of the upper half body 11U and the lower half body 11D. Therefore, through holes 13n penetrating in the up-down direction are bored in the flange portions 13a and 13e (the through hole of the flange portion 13e is not illustrated). Among the three flange portions 13a to 13b and 13e to 13f, the central flange portions 13b and 13f positioned between the left and right flange portions 13a and 13e are joined to the respective front end portions of the upper half body 11U and the lower half body 11D by spot welding. Further, of the flange portions 13c and 13g extending along the inner wall surface of the tubular body 11, the flange portion 13c is joined to the front end portion of the upper half body 11U by spot welding, and the flange portion 13g is in contact with an inner wall surface of the front end portion of the lower half body 11D.

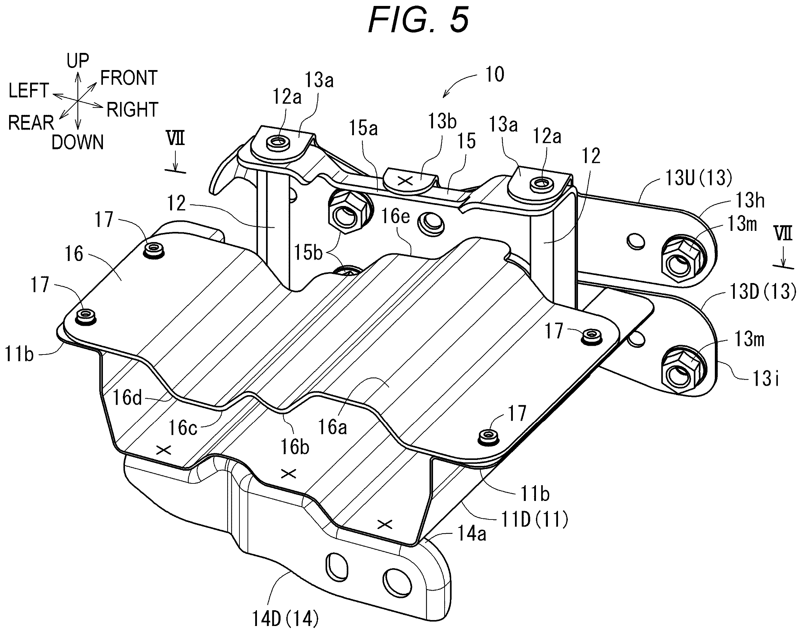

The upper front mounting bracket 13U and the lower front mounting bracket 13D include extension portions 13h and 13i at right end portions, and the extension portions 13h and 13i extend and protrude outside the hollow portion of the tubular body 11 beyond a range in which the upper front mounting bracket 13U and the lower front mounting bracket 13D cover the hollow portion. Through holes 13j and 13k penetrating in the front-rear direction are bored in distal end portions of the extension portions 13h and 13i, and weld nuts 13m are welded and joined to rear surfaces of the extension portions 13h and 13i in correspondence with the respective through holes 13j and 13k as illustrated in Fig. 5.

### <Lashing Hook and Lashing Nut>

A lashing nut 19 for screwing and fixing a lashing hook 18 is provided in front of the front crash box 10 or behind the rear crash box 10 as necessary. A through hole (not illustrated) is bored in the bumper reinforcement 21 disposed in front of or behind the lashing nut 19 as necessary, and the lashing hook 18 is screwed into the lashing nut 19 through the through hole. The lashing hook 18 is used to couple a towing wire or rope when vehicles are connected by the towing wire or rope and one of the vehicles tows the other. The lashing hook 18 is also used to couple a lashing wire or rope when a vehicle is lashed to a floor in a transport ship. It is not necessary to provide the lashing hooks 18 in all the crash boxes 10. For example, as illustrated in Fig. 1, the lashing hook 18 may not be provided in the crash box 10 disposed in the right front.

### <Lashing Bracket>

As illustrated in Figs. 5 and 6, the crash box 10 including the lashing nut 19 includes a lashing bracket 15 for supporting the lashing nut 19, and a pair of long rivet pins 12 for fixing the lashing bracket 15 to the tubular body 11. The lashing bracket 15 having a substantially rectangular plate shape is joined to a rear surface of the lower front mounting bracket 13D by spot welding. Spot welding is performed at two spots marked with cross on upper sides of the flange portions 13e and 13f on a plate surface of the lower front mounting bracket 13D (see Fig. 6). Through holes 13o and 13p penetrating in the front-rear direction are bored in respective left end portions of the upper front mounting bracket 13U and the lower front mounting bracket 13D. In correspondence with the through holes 13o and 13p, similar through holes 15d are bored in the lashing bracket 15, respectively (see Fig. 6). Further, weld nuts 15b are welded and joined to the rear surface of the lashing bracket 15 in correspondence with the through holes 15d as illustrated in Fig. 5. These weld nuts 13m and 15b are used for bolt fastening when the crash box 10 is coupled to the bumper reinforcement 21.

As illustrated in Figs. 5 and 6, the lashing bracket 15 having the substantially rectangular plate shape is disposed so as to cover the front end portion of the tubular body 11 with a plate surface, and has a shape and a size substantially covering the hollow portion of the tubular body 11. It is also possible to provide an end plate other than the lashing bracket 15. Upper and lower ends of the lashing bracket 15 are bent rearward to form flange portions 15a. An upper surface of the upper flange portion 15a and a lower surface of the lower flange portion 15a are in contact with upper and lower inner wall surfaces of the front end portion of the tubular body 11, respectively. Through holes 15c penetrating in the up-down direction are bored in the respective left and right end portions of the upper and lower flange portions 15a, respectively, and as described above, the long rivet pins 12 that are round rods are inserted into the through holes 15c in the up-down direction. Each of the through holes 15c has a minimum inner diameter into which a corresponding one of the long rivet pins 12 can be inserted, and the inner diameter prevents the long rivet pin 12 from moving in a direction orthogonal to the insertion direction.

A through hole 15e penetrating in the front-rear direction is bored in a portion shifted to lower right from a central portion on the plate surface of the lashing bracket 15, and the lashing nut 19 having a substantially cylindrical shape is inserted into the through hole 15e from the rear side to the front side of the lashing bracket 15. An outer circumferential surface of the lashing nut 19 is joined to the rear surface of the lashing bracket 15 by arc welding. A female screw (not illustrated) is formed in a rear-end-side inner circumferential surface of the lashing nut 19. By screwing a male screw (not illustrated) formed at a tip of the lashing hook 18 into the female screw, the lashing hook 18 can be fastened and fixed to the lashing nut 19. The upper front mounting bracket 13U and the lower front mounting bracket 13D disposed on a front surface of the lashing bracket 15 have notches 13q and 13r so as to avoid interference with the outer circumferential surface of the lashing nut 19. The lashing bracket 15 has a thicker plate thickness than the tubular body 11 and the front mounting bracket 13 so as to withstand a force from the lashing hook 18. Since the tubular body 11 has the small plate thickness so as to be buckled and deformed by receiving the collision load, the plate thickness decreases in the order of the lashing bracket 15, the front mounting bracket 13, and the tubular body 11.

### <Reinforcement of Crash Box by Long Rivet Pin>

As illustrated in Figs. 5 and 6, the two long rivet pins 12 are round rods each having a thickness that can be exactly inserted into a corresponding one of the through holes 15c of the lashing bracket 15, and each have a stepped shape in which a thickness in upper and lower distal end portions is further reduced compared to a central portion in the up-down direction. The thickness of the small-diameter distal end portion of each of the long rivet pins 12 is set to an outer diameter that can be just inserted into the respective through holes 13n of the flange portions 13a and 13e of the upper front mounting bracket 13U and the lower front mounting bracket 13D and respective through holes (not illustrated) at the front end portion of the tubular body 11 overlapped with the flange portions 13a and 13e in a plate thickness direction. Each of the through holes at the front end portion of the tubular body 11 is formed corresponding to a corresponding one of the through holes 13n.

In a state where each of the long rivet pins 12 is inserted into a hole such as the corresponding one of the through holes 15c and the corresponding one of the through holes 13n, end surfaces at upper and lower ends of each of the long rivet pins 12 are riveted in the axial direction by a riveting tool, whereby riveting marks 12a are formed on the end surfaces at the upper and lower ends of each of the long rivet pins 12. As a result, the outer diameter of the distal end portion of each of the long rivet pins 12 increases by a volume of a corresponding one of the riveting marks 12a, and the respective flange portions 13a and 13e of the upper front mounting bracket 13U and the lower front mounting bracket 13D and the front end portion of the tubular body 11 are coupled to the upper and lower ends of each of the long rivet pins 12. Each of the long rivet pins 12 is provided only when the crash box 10 is provided with the lashing nut 19. When the crash box 10 is not provided with the lashing nut 19, neither the lashing bracket 15 nor each of the long rivet pins 12 is provided. When the long rivet pins 12 are not provided, the flange portions 13a and 13e of the upper front mounting bracket 13U and the lower front mounting bracket 13D are joined by spot welding to the front end portion of the tubular body 11 overlapped with the flange portions 13a and 13e in the plate thickness direction.

### <Reinforcement of Crash Box by Intermediate Plate>

As illustrated in Figs. 4 to 9, the intermediate plate 16 is a plate member having an outer shape approximate to that of the half bodies 11U and 11D, and is sandwiched between the respective joint portions 11a and 11b of the upper half body 11U and the lower half body 11D with a front surface and a back surface of the plate as the up-down direction. Therefore, the intermediate plate 16 is held between the upper half body 11U and the lower half body 11D. Through holes 16m penetrating in the up-down direction are bored in both left and right end portions 16j and 16k of the intermediate plate 16. The intermediate plate 16 is riveted and joined between the respective joint portions 11a and 11b of the upper half body 11U and the lower half body 11D by commonly inserting short rivet pins 17 inserted into the respective joint portions 11a and 11b into the through holes 16m to perform riveting.

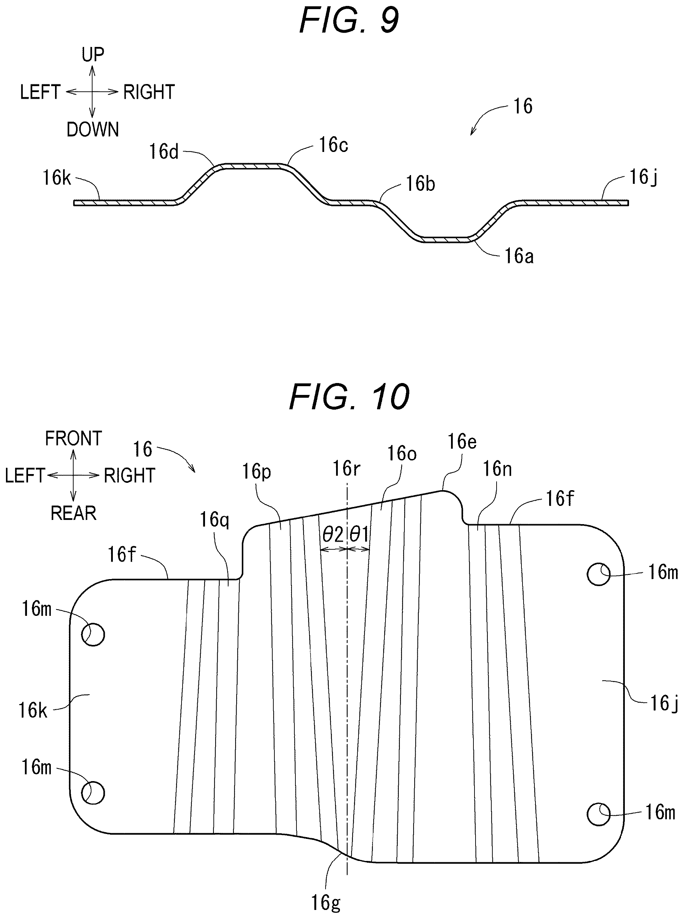

The intermediate plate 16 includes bent portions 16a to 16d formed to be bent such that plate surfaces protrude to both the front and back surfaces. The bent portions 16a to 16d form ridgelines extending in straight lines in the front-rear direction that is the input direction of the collision load. As illustrated in Fig. 9, the plate surface of the intermediate plate 16 is bent downward to form two bent portions 16a and 16b, and the plate surface of the intermediate plate 16 is bent upward to form two bent portions 16c and 16d. The bent portions 16a and 16b are formed to be biased to the left side of the intermediate plate 16, and the bent portions 16c and 16d are formed to be biased to the right side of the intermediate plate 16.

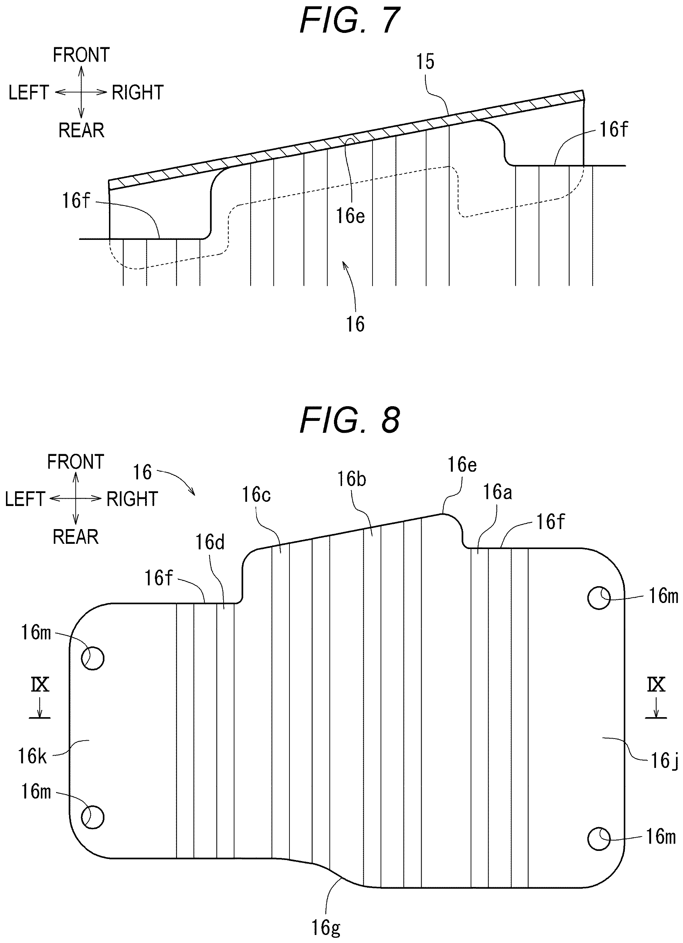

As illustrated in Fig. 4, a rear end portion 16g of the intermediate plate 16 is aligned with the rear end portion of the tubular body 11. On the other hand, as illustrated in Figs. 5, 7, and 8, the front end portion of the intermediate plate 16 has a center portion in the left-right direction facing the lashing bracket 15 and protruding forward to form a contact portion 16e. In addition, non-contact portions 16f are formed adjacent to both left and right sides of the contact portion 16e. As illustrated in Fig. 5, the contact portion 16e and the non-contact portions 16f are positioned rearward of the front end portion of the tubular body 11. As illustrated in Figs. 5 and 7, the contact portion 16e is in contact with a rear surface of the lashing bracket 15, and the non-contact portions 16f are disposed away from the rear surface of the lashing bracket 15 and the long rivet pins 12.

### <Rear Mounting Bracket of Crash Box>

As illustrated in Figs. 3 to 5, the rear mounting bracket 14 including an upper rear mounting bracket 14U and a lower rear mounting bracket 14D is coupled to the rear end portion of the tubular body 11. The upper rear mounting bracket 14U is disposed along an upper surface of the upper half body 11U forming the tubular body 11. The lower rear mounting bracket 14D is disposed along a lower surface of the lower half body 11D. The upper rear mounting bracket 14U and the lower rear mounting bracket 14D have shapes along respective surface shapes of the upper half body 11U and the lower half body 11D, and flange portions 14a are formed at end portions on respective surface sides of the upper half body 11U and the lower half body 11D of the upper rear mounting bracket 14U and the lower rear mounting bracket 14D, respectively. Each flange portion 14a is formed to be bent forward along each surface of the upper half body 11U and the lower half body 11D. Each flange portion 14a is joined to each surface of the upper half body 11U and the lower half body 11D by spot welding. Spot welding is performed in each of the flange portions 14a of the upper rear mounting bracket 14U and the lower rear mounting bracket 14D at three spots as indicated by cross marks.

The upper rear mounting bracket 14U and the lower rear mounting bracket 14D are used to fasten and couple the crash box 10 to the side member 22 of the vehicle body with bolts and nuts. Therefore, the shapes of rear surfaces of the upper rear mounting bracket 14U and the lower rear mounting bracket 14D and the shape of the rear end portion of the tubular body 11 are adapted to a shape of a coupling surface of the side member 22. In addition, through holes 14b penetrating in the front-rear direction are formed in right end portions of the upper rear mounting bracket 14U and the lower rear mounting bracket 14D, respectively, and fastening bolts can be inserted into the through holes 14b. The flange portion 14a is formed by extending around the through hole 14b, and the flange portion 14a in that portion functions as a reinforcing rib to increase bending strength of the upper rear mounting bracket 14U and the lower rear mounting bracket 14D.

### <Advantageous Effects>

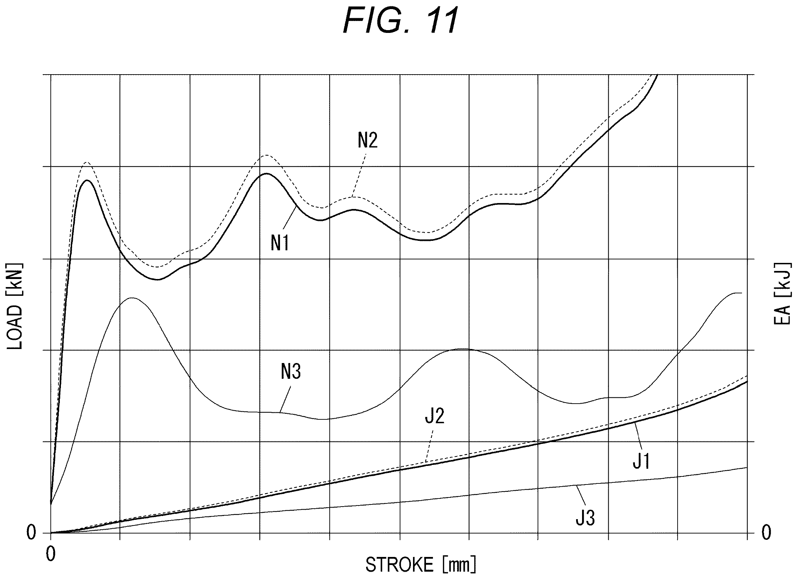

When the crash box 10 described above receives the collision load from the front, the tubular body 11 is buckled and deformed to absorb collision energy. At this time, since the intermediate plate 16 is interposed in the tubular body 11, the intermediate plate 16 is also buckled and deformed simultaneously with the tubular body 11 to contribute to absorption of collision energy. A model of the crash box 10 including the intermediate plate 16 and a crash box of a comparative example not including the intermediate plate 16 were created by a computer, and a collision simulation was performed to calculate a load and an energy absorption amount. As can be seen from Fig. 11 illustrating the results, the load applied to the crash box 10 is larger in the crash box 10 (N1) including the intermediate plate 16 than in the crash box (N3) not including the intermediate plate 16. As a result, the amount of energy absorbed by the crash box 10 (J1) including the intermediate plate 16 is also larger than that of the crash box (J3) not including the intermediate plate 16.

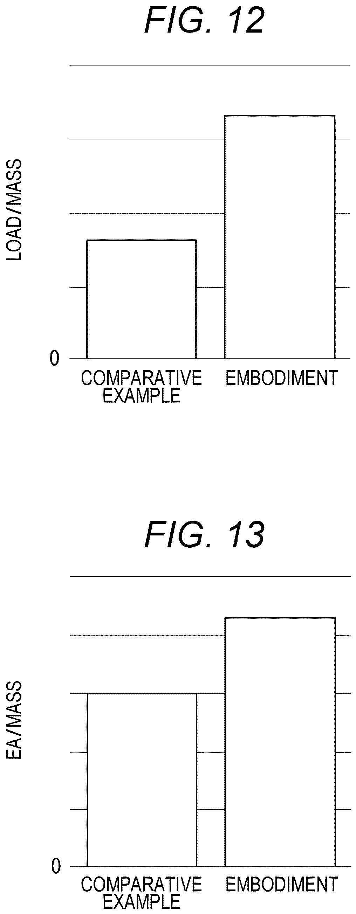

Figs. 12 and 13 illustrate a comparison between the load and the energy absorption amount per unit mass of the crash box. As can be seen from Fig. 12, the load per unit mass of the crash box 10 including the intermediate plate 16 is about twice that of the comparative example. As can be seen from Fig. 13 illustrating a result of another test, the energy absorption amount per unit mass of the crash box 10 including the intermediate plate 16 is about 1.5 times that of the crash box 10 in the comparative example.

In the crash box 10 including the intermediate plate 16, the configuration of the tubular body 11 and the like other than the intermediate plate 16 can be shared with the crash box not including the intermediate plate. That is, only by adding the intermediate plate 16 to the conventional crash box, it is possible to greatly increase the load and the energy absorption amount applied to the crash box 10. Accordingly, the crash box 10 including the intermediate plate 16 can be produced on a common production line as the crash box not including the intermediate plate 16.

The intermediate plate 16 includes a plurality of bent portions 16a to 16d to increase buckling deformation strength against the collision load in the front-rear direction. Thus, the intermediate plate 16 can be thinned, the tubular body 11 and other members do not need to be increased in strength, and an increase in weight and manufacturing cost as the crash box 10 can be suppressed. Moreover, the intermediate plate 16 is sandwiched and supported between the joint portions 11a and 11b of the upper half body 11U and the lower half body 11D. Therefore, when receiving the collision load, the intermediate plate 16 is deformed in a buckling mode in which the intermediate plate 16 is buckled by receiving the collision load, not in a falling mode in which the intermediate plate 16 is inclined with respect to the input direction of the collision load. Therefore, the intermediate plate 16 can absorb sufficient collision energy.

In the intermediate plate 16, the bent portions 16a to 16d are formed so as to protrude to both front and back sides of the plate surface. Therefore, the collision load transmitted to the side member 22 via the intermediate plate 16 is widely dispersed to both the front and back sides of the intermediate plate 16. As a result, it is possible to suppress stress concentration on the central portion of the side member 22 and to reduce the weight and cost of the side member 22 side component.

The intermediate plate 16 includes the contact portion 16e and the non-contact portions 16f at the front end portion, and receives a collision load at an initial stage of collision in the contact portion 16e via the lashing bracket 15 as an end plate. After the contact portion 16e is buckled and deformed, the entire intermediate plate 16 including the non-contact portions 16f receives the collision load. Therefore, it is possible to suppress rapid rising and increasing from the initial stage of the collision of the collision load applied to the intermediate plate 16 and rapid decreasing of the collision load together with the buckling deformation of the intermediate plate 16, to moderate a change in the load applied to the intermediate plate 16 at the time of the collision, and to increase the energy absorption amount of the intermediate plate 16. In addition, since the bent portions 16b and 16c are formed corresponding to the contact portion 16e, the collision load applied to the contact portion 16e can be appropriately increased. When the crash box 10 does not include the lashing bracket 15, the front mounting bracket 13 or the bumper reinforcement 21 is designed to be an end plate that comes into contact with the contact portion 16e of the intermediate plate 16.

The contact portion 16e of the intermediate plate 16 is formed in the central portion in the left-right direction of the intermediate plate 16, and the non-contact portions 16f are formed on both the left and right sides of the contact portion 16e. Therefore, when the intermediate plate 16 is assembled by bringing the contact portion 16e into contact with the rear surface of the lashing bracket 15, the non-contact portions 16f are at positions corresponding to the long rivet pins 12, and the intermediate plate 16 can be prevented from interfering with the long rivet pins 12. Therefore, assembling workability of the intermediate plate 16 can be improved. In addition, a plurality of (specifically, two) bent portions 16b and 16c is formed corresponding to the contact portion 16e. Therefore, it is possible to appropriately increase the collision load applied to the contact portion 16e while suppressing a width of the contact portion 16e in the left-right direction.

### <Non-parallel Bent Portion>

Fig. 10 illustrates an intermediate plate 162 of a crash box as another embodiment. The ridgelines of the bent portions 16b and 16c of the intermediate plate 16 in Fig. 8 are arranged in parallel, whereas ridgelines of bent portions 16o and 16p of the intermediate plate 162 in Fig. 10 are arranged in non-parallel. That is, the ridgelines of the bent portions 16o and 16p are arranged to be inclined so as to be separated from each other toward the front side, which is the input side of the collision load, as compared with the rear side, which is the opposite side. Accordingly, the ridgelines of the bent portions 16o and 16p are arranged to be inclined at angles θ1 and θ2, respectively, with respect to a center line 16r of a left-right width of the intermediate plate 16. Other configurations can be the same as those of the above embodiment, and thus the description thereof will not be repeated.

In the intermediate plate 162, the ridgelines of the bent portions 16o and 16p are arranged to be inclined as described above, so that the buckling deformation strength against the collision load is increased. Therefore, as illustrated in Fig. 11, a collision load (N2) received by the crash box 10 with the intermediate plate 162 of Fig. 10 disposed in the tubular body 11 is about 5% larger than that (N1) of the intermediate plate 16 of Fig. 8. An energy absorption amount (J2) of the crash box 10 is also about 5% larger than that (J1) of the intermediate plate 16 of Fig. 8. Therefore, in the intermediate plate 162 of Fig. 10, it is possible to reduce the weight and cost of the intermediate plate 162 by making the plate thickness thereof thinner than that of the intermediate plate 16 of Fig. 8.

### <Other Embodiments>

In the above embodiment, the intermediate plate is sandwiched between the joint portions of the two half bodies, but the intermediate plate may be fixed to and supported by the end plate. In the above embodiment, the intermediate plate includes the contact portion at the end portion on the input side of the collision load, but the contact portion may be provided at the end portion opposite to the input-side end portion of the collision load. In the above embodiment, the non-contact portions of the intermediate plate are formed on respective sandwiched portion sides of the intermediate plate sandwiched between the respective joint portions of the respective half bodies with the contact portion interposed between the non-contact portions, but the contact portion may be formed on any one side of the respective sandwiched portions of the intermediate plate, and the non-contact portion may be formed on the other side.

### <Other Advantageous Effects >

The above embodiment also has the following advantageous effects.

In some embodiments, the intermediate plate is sandwiched and supported between the joint portions of the respective half bodies. Therefore, when receiving the collision load, the intermediate plate is not in the falling mode in which the intermediate plate is inclined with respect to the input direction of the collision load, but in the buckling mode in which the intermediate plate is buckled by receiving the collision load. Therefore, the intermediate plate can absorb the collision energy as scheduled.

In some embodiments, the intermediate plate has the bent portions formed on both the front and back sides of the plate surface. Therefore, the collision load transmitted to a vehicle body frame via the intermediate plate is widely dispersed to both the front and back sides of the intermediate plate. As a result, it is possible to suppress stress concentration on a central portion of the vehicle body frame and to reduce weight and cost of the vehicle body frame side component.

In some embodiments, the contact portion of the intermediate plate can be buckled and deformed at the initial stage of the collision, and then the entire intermediate plate can be buckled and deformed. Therefore, it is possible to suppress the rapid increase in the load applied to the intermediate plate at the initial stage of the collision and the rapid decrease in the load along with the progression of buckling deformation. That is, the collision energy absorption amount by the intermediate plate can be appropriately controlled.

In some embodiments, the contact portion is limited to the central portion of the intermediate plate. Therefore, the outer shape of the intermediate plate can be substantially downsized, and workability of inserting the intermediate plate between the two half bodies can be improved.

In some embodiments, at the initial stage of the collision, only the contact portion can be reliably buckled and deformed prior to the buckling and deformation of the entire intermediate plate.

In some embodiments, by forming the ridgeline corresponding to the contact portion of the intermediate plate, the load borne by the portion corresponding to the contact portion of the intermediate plate can be appropriately increased.

In some embodiments, the collision load applied to the intermediate plate can be increased, and the plate thickness of the intermediate plate can be reduced to reduce the weight and cost of the intermediate plate.

The specific embodiments have been described above. However, the present technology is not limited to these embodiments, and those skilled in the art can make various modifications, substitutions, and improvements.

## Claims

1. A crash box comprising:
a tubular body having a hollow portion therein, and buckled and deformed by receiving a collision load input in a penetrating direction of the hollow portion to absorb collision energy; and
an intermediate plate that is held by the tubular body and is a plate body that divides the hollow portion into two regions in a direction intersecting the penetrating direction,
wherein the intermediate plate has at least one bent portion, and the bent portion forms a ridgeline extending in a straight line in a collision load input direction.

2. The crash box according to claim 1, wherein
the tubular body is configured such that half bodies divided into two in the direction intersecting the penetrating direction of the hollow portion are joined by joint portions formed along a division line, and
the intermediate plate is sandwiched between the joint portions of the half bodies joined to each other.

3. The crash box according to claim 1 or 2,
wherein the at least one bent portion is a plurality of bent portions, and the bent portions protrude to both sides of a plate surface of the intermediate plate.

4. The crash box according to claim 2, comprising:
an end plate covering an end portion of the tubular body so as to close the hollow portion of the tubular body,
wherein the intermediate plate has an end portion extending toward the end plate, and the end portion includes a contact portion in contact with the end plate and at least one non-contact portion adjacent to the contact portion and separated from the end plate so as not to contact the end plate.

5. The crash box according to claim 4,
wherein the at least one non-contact portion of the intermediate plate is two non-contact portions formed on both sides of the contact portion.

6. The crash box according to claim 4,
wherein the intermediate plate includes the contact portion and the at least one non-contact portion at an end portion on an input side of the collision load.

7. The crash box according to claim 4,
wherein the bent portion is formed in a range corresponding to the contact portion.

8. The crash box according to claim 7,
wherein the at least one bent portion is a plurality of bent portions formed in the range corresponding to the contact portion, at least some of the plurality of bent portions are formed not parallel to each other, and other bent portion adjacent to one of the bent portions is arranged to be inclined such that the adjacent bent portions are separated from each other toward an input side of the collision load as compared with a side opposite the input side.
